# EUROPÄISCHE PATENTSCHRIFT

(11) **EP 0 401 524 B1**
(45) Veröffentlichungstag und Bekanntmachung des Hinweises auf die Patenterteilung: **03.11.1993**
(21) Anmeldenummer: 90108614.0
(22) Anmeldetag: 08.05.1990
(51) Int. Cl.: G01L 9/10, A61M 5/142

(54) **Drucksensor für Infusionsleitungen**
Pressure sensor for infusion conduits
Capteur de pression pour conduits d'infusion

(30) Priorität: 07.06.1989 DE 3918534
(43) Veröffentlichungstag der Anmeldung: 12.12.1990
(73) Patentinhaber: B. Braun Melsungen AG, 34209 Melsungen (DE)
(72) Erfinder: Mosebach, Wolfgang, D-3509 Dagobertshausen (DE); Heitmeier, Rolf, D-3507 Baunatal (DE); Gerlach, Hans, D-3538 Marsberg 4 (DE); Rath, Dieter, D-3508 Melsungen (DE)
(74) Vertreter: Selting, Günther, Dipl.-Ing.

(56) Entgegenhaltungen:
- EP-A- 0 172 117
- EP-A- 0 291 727
- AT-B- 387 461
- DD-A- 114 862
- R. KAUTSCH "Messelektronik nichtelektrischer Grössen", Teil 2 : "Messfühler und Messverfahren, 1971, Hans Holzmann Verlag KG, Bad Wörishofen, Seiten 110, 111.

## Beschreibung

Die Erfindung betrifft einen Drucksensor der im Oberbegriff des Patentanspruchs 1 angegebenen Art.

Aus EP 0291 727 ist ein Drucksensor zur Messung des Drucks einer Einmal-Pumpenkassette bekannt. Dieser Sensor weist ein stabförmiges Andrückorgan auf, welches gegen eine Membran der Pumpenkassette gesetzt und dabei von zwei Blattfedern festgehalten wird. Bei einem hohen Druck gegen die Membran wird das Andrückorgan gegen die Federwirkung der Blattfedern zurückgedrückt. Eine der Blattfedern weist Dehnmeßstreifen auf, mit denen die Biegung dieser Blattfeder gemessen und daraus der in der Pumpenkassette herrschende Druck ermittelt werden kann. Die Messung eines Drucks oder einer Kraft mit hoher Genauigkeit ist mit Dehnmeßstreifen generell nur mit hohem Aufwand möglich. Die Dehnmeßstreifen erfordern eine extrem sorgfältige Montage. Außerdem besteht die Ge fahr, daß durch Alterung der Klebestellen eine Langzeitdrift des Meßsignals auftritt.

Andere bekannte Drucksensoren ermitteln den Druck mit Hilfe kapazitiver Kraftmessungen. Hierbei ergibt sich durch den Umstand, daß sich die Dielektrizitätskonstante des Dielektrikums in Abhängigkeit von Luftfeuchtigkeit, Temperatur oder Verschmutzung mit der Zeit ändert, ebenfalls eine nur sehr eingeschränkte Langzeit-Genauigkeit.

Der Oberbegriff des Patentanspruchs 1 geht aus von einem Drucksensor nach DD-A-114 862. Dieser Drucksensor weist einen gegen den Schlauch drückenden Taststift auf, der an einer Blattfeder befestigt ist. Zentrisch zum Taststift ist ein Beeinflussungsteil in Form eines Ferritkerns angeordnet, der von dem im Schlauch herrschenden Druck durch den Taststift bewegt wird. Der Ferritkern befindet sich im Empfindlichkeitsbereich einer Schwingspule, deren Schwingung durch Annäherung des Ferritkerns verändert wird. Die Änderungen der Schlauchdicke entsprechen unmittelbar den Abstandsänderungen des Ferritkerns in bezug auf die Schwingspule. Relativ kleine Änderungen des Schlauchkerns führen nicht zu unterscheidbaren Meßergebnissen.

Der Erfindung liegt die Aufgabe zugrunde, einen Drucksensor der im Oberbegriff des Patentanspruchs 1 angegebenen Art zu schaffen, der bei einfachem konstruktiven Aufbau sehr genaue Druckmessungen ermöglicht und dessen Genauigkeit auch im Langzeiteinsatz und unter variierenden Umweltbedingungen erhalten bleibt.

Die Lösung dieser Aufgabe erfolgt erfindungsgemäß mit den im kennzeichnenden Teil des Patentanspruchs 1 angegebenen Merkmalen.

Bei dem erfindungsgemäßen Drucksensor wirkt das Andrückorgan auf einen Balken, der nach Art eines einarmigen Hebels an einem Ende fixiert oder gelagert ist. Der Balken drückt das Andrückorgan federnd gegen den für die Druckmessung vorgesehenen elastischen Schlauchabschnitt der Infusionsleitung. An dem äußeren freien Ende des Balkens befindet sich das Beeinflussungsteil, das mit mindestens einer ortsfest angeordneten Schwingspule zusammenwirkt. Durch die unterschiedlich langen Hebelarme von Andrückorgan einerseits und Beeinflussungsteil andererseits wird eine Wegverstärkung entsprechend dem Verhältnis der Längen dieser Hebelarme erreicht. Dies bedeutet, daß das Beeinflussungsteil bei einer relativ geringen Dimensionsänderung des Schlauchabschnitts einen relativ großen Weg zurücklegt. Infolge dieser Wegverstärkung kann ein induktiver Wegmesser benutzt werden, der die Dimensionsänderungen des Schlauchabschnitts mit sehr hoher Genauigkeit feststellt. Der induktive Wegmesser enthält mindestens eine Schwingspule, in der eine elektrische Schwingung aufrechterhalten wird. Entsprechend der Nähe des Beeinflussungsteils zur Schwingspule ändert sich die Frequenz, die Amplitude oder ein anderer Parameter der Schwingung. Auf diese Weise kann die Position des Beeinflussungsteils berührungslos festgestellt werden.

Der Balken ist vorzugsweise eine Biegefeder, die an einem Ende fest eingespannt ist. Anstelle einer Biegefeder kann aber auch ein starrer Balken benutzt werden, der unter der Wirkung einer separaten Feder steht.

Das Beeinflussungsteil ist vorzugsweise ein Spulenkern, z.B. aus Ferritmaterial. Ein solcher Spulenkern benötigt keine elektrischen Anschlüsse. Andererseits kann als Beeinflussungsteil auch eine Spule verwandt werden, beispielsweise eine Kurzschlußspule oder ein an eine externe Spannungsquelle angeschlossene Spule.

Die Auswertung der Drucksignale erfolgt vorzugsweise dadurch, daß in regelmäßigen Zeitintervallen Messungen der Position des Beeinflussungsteils durchgeführt werden. Nach einer vorgegebenen Anzahl von Messungen wird durch Mittelwertbildung ein repräsentativer Druckwert ermittelt. Diese Art der Meßwertauswertung liefert unabhängig von den zeitlichen Druckänderungen im Schlauchabschnitt ein repräsentatives Meßergebnis. Dies gilt auch für den Fall, daß der Druck im Schlauch pulsiert, wenn die Frequenz der Druckmessungen bzw. die Abtastfrequenz von der Druckfrequenz verschieden ist. In jedem Fall ergibt sich bei einer hinreichend großen Anzahl von Meßwerten und anschließender Mittelwertbildung ein repräsentativer Druckwert, der Aufschluß gibt über den mittleren Druck im Schlauchabschnitt. Dies gilt auch für den Fall, daß die Pumpfrequenz sich ändert.

Der Drucksensor ist insbesondere in Verbindung mit Infusionspumpen einsetzbar und er kann in eine Infusionspumpe integriert sein. Infusionspumpen müssen so dimensioniert sein, daß sie den notwendigen Förderdruck zum Verabreichen einer Infusionslösung oder eines Medikamentes aufbauen, andererseits besteht aber auch die Notwendigkeit der Druckbegrenzung. Dies ist wichtig, um das Bolusvolumen niedrig zu halten bzw. eine eventuelle Okklusion der Infusionsleitung frühzeitig zu erkennen, damit keine Nichtversorgung des Patienten mit dem Medikament auftritt. Vorzugsweise ist der Sensor so ausgebildet, daß der repräsentative Druckwert unterhalb einer wählbaren Obergrenze und oberhalb einer ebenfalls wählbaren Untergrenze liegen muß. Liegt der repräsentative Druckwert außerhalb dieses Bereichs wird Alarm erzeugt. Bei Unterschreiten der Untergrenze des repräsentativen Druckwertes können Undichtigkeiten im Infusionsleitungssystem sowie ein ungehindertes freies Ausfließen der Infusionsflüssigkeit erkannt werden.

Im folgenden wird unter Bezugnahme auf die Zeichnungen ein Ausführungsbeispiel der Erfindung näher erläutert.

Es zeigen:

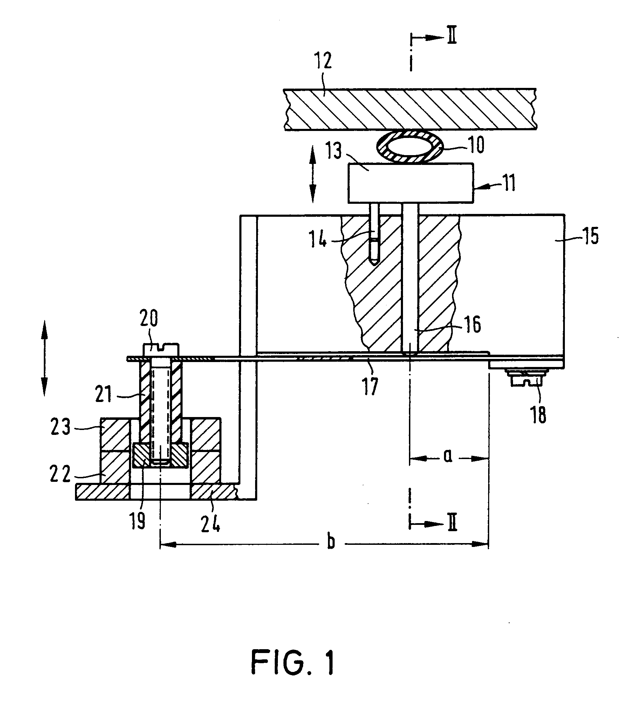

- Fig. 1: eine schematische Darstellung des Drucksensors, teilweise geschnitten,
- Fig. 2: einen Schnitt entlang der Linie II-II von Fig. 1, und
- Fig. 3: eine schematische Darstellung der Signalerzeugung und Auswertung.

Der Drucksensor weist einen in eine Infusionsleitung eingesetzten elastischen Schlauchabschnitt 10 auf, der beispielsweise aus Siliconmaterial besteht. Es kann sich auch um einen Abschnitt der Infusionsleitung handeln. Dieser Schlauchabschnitt 10 wird von einem Andrückorgan 11 gegen ein Widerlager 12, beispielsweise gegen einen Gehäusedeckel, gedrückt. Das Andrückorgan 11 weist eine quer zum Schlauchabschnitt 10 verlaufendes Druckstück 13 auf, welches mit seinem abgerundeten oberen Rücken den Schlauchabschnitt 10 gegen das Widerlager 12 drückt. Das Druckstück 13 ist mit Führungsstiften 14 in einem Trägerblock 15 geführt und kann sich in radialer Richtung des Schlauchabschnitts bewegen. Von dem Druckstück 11 steht ein Stößel 16 ab, der ebenfalls durch einen Kanal des Trägerblocks 15 hindurchführt und gegen einen Balken 17 drückt, der als Biegefeder ausgebildet und an der dem Schlauchstück 10 abgewandten Unterseite des Trägerblocks 15 befestigt ist.

Der Balken 17 ist mit der Schraube 18 an seinem einen Ende fest am Trägerblock 15 montiert. Der Stößel 16 greift im Abstand a von der Einspannstelle an. An dem freien Ende des Balkens 17 ist das Beeinflussungsteil 19 im Abstand b von der Einspannstelle befestigt. Der Abstand b beträgt mindestens das Doppelte des Abstandes a und vorzugsweise mindestens das Dreifache dieses Abstandes. Der Balken 17 bildet einen einarmigen Hebel mit dem Hebelverhältnis b:a, das eine Verstärkung des Weges des Stößels 16 um mindestens den Faktor 2 hervorruft.

Das Beeinflussungsteil 19 ist ein ringförmiger Spulenkern, z.B. aus Ferritmaterial, der mit einer Schraube 20 an dem Ende des Balkens 17 befestigt ist, wobei zwischen dem Balken 17 und dem Beeinflussungsteil 19 ein die Schraube 20 umgebender Abstandhalter 21, z.B. aus Kunststoff, angeordnet ist.

Das Beeinflussungsteil 19 befindet sich in einem Raum, der von den beiden Schwingspulen 22 und 23 umschlossen ist. Beide Schwingspulen 22 und 23 sind in Achsrichtung hintereinander angeordnet und auf einem mit dem Trägerblock 15 fest verbundenen Träger 24 montiert. Die Bewegungsrichtung des Beeinflussungsteils 19 verläuft im wesentlichen parallel zur Bewegungsrichtung des Stößels 16.

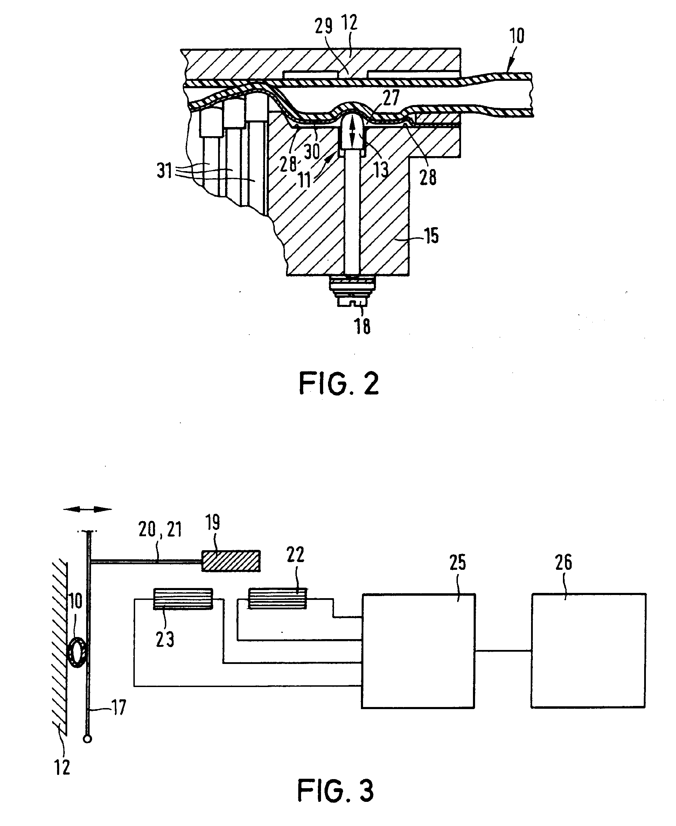

Wie Fig. 3 zeigt, sind die beiden Schwingspulen 22 und 23 an eine Schwingungserregerschaltung 25 angeschlossen. Die Schwingspulen bilden in Verbindung mit dem Schwingungserzeuger 25 RL-Schwinger, deren Frequenz von der Größe der Induktivität abhängt. Die Größe der Induktivität ändert sich entsprechend dem Abstand des Beeinflussungsteils 19 von der jeweiligen Spule. Befindet sich das Beeinflussungsteil 19 genau in der Mitte zwischen beiden Schwingspulen 22 und 23, so schwingen diese mit gleichen Frequenzen. Bei einer Verlagerung des Beeinflussungsteils 19 erhöht sich die Frequenz der einen Schwingspule, während sich die Frequenz der anderen Schwingspule erniedrigt. Das Verhältnis der Schwingungsfrequenzen ergibt ein Signal, welches zur Positionsbestimmung des Beeinflussungsteils 19 und damit zur Bestimmung des Drucks im Schlauchabschnitt 10 ausgewertet wird. Die Auswertung der Signale erfolgt in einem Rechner 26.

Bei der Auswertung werden aus den gemessenen Positionen des Beeinflussungsteils 19 unter Berücksichtigung der Federkonstante des Balkens 17 die Kräfte bzw. Drücke ermittelt, die von dem Schlauchabschnitt 10 auf das Andrückorgan 11 ausgeübt werden. Die Auswertung erfolgt im Abtastverfahren mit einer vorgegebenen Abtastfrequenz. Zu jedem Meßzeitpunkt wird das Drucksignal aufgenommen. Die hintereinander aufgenommenen Drucksignale werden im Rechner 26 addiert und nach einer vorgegebenen Anzahl von Drucksignalen wird aus der Summe der addierten Drucksignale das arithmetische Mittel gebildet, das den repräsentativen Druckwert darstellt. Dieser repräsentative Druckwert wird mit einem oberen und einem unteren Schwellenwert verglichen. Diese Schwellenwerte können vom Benutzer verändert werden. Eine Alarmgabe bzw. Unterbrechung des Betriebes der Infusionsleitung erfolgt dann, wenn der repräsentative Druckwert außerhalb des Zulässigkeitsbereichs liegt oder dann, wenn dieser repräsentative Druckwert für eine bestimmte Mindestzeit außerhalb des Zulässigkeitsbereichs liegt.

Aus Fig. 2 ist zu ersehen, daß das Andrückorgan 11 sich im mittleren Bereich der Länge einer Druckmeßkammer 27 befindet, durch die das Schlauchstück 10 hindurchführt. In Schlauchrichtung sind vor und hinter dem Andrückorgan 11 Stützflächen 28 vorhanden, von denen das Druckstück 13 in Richtung auf das Schlauchstück 10 vorsteht. Dem Druckstück 13 gegenüber ist am Widerlager 12 eine vorspringende Stützfläche 29 angeordnet.

Eine Membran 30 verläuft durch die Druckmeßkammer 27 hindurch. Diese Membran 30 bedeckt die Stützflächen 28. Sie ist mit ihren Rändern an den ortsfesten Teilen des Drucksensors eingespannt und verhindert eine direkte Berührung des Schlauchabschnitts 10 mit dem Andrückorgan 11. Bei einer Undichtigkeit des Schlauchstücks 10 werden daher die funktionswesentlichen Teile des Sensors nicht beschmutzt.

Bei dem vorliegenden Ausführungsbeispiel ist der Drucksensor Bestandteil einer Fingerpumpe, bei der zahlreiche linear bewegte Andrückfinger 31 das Schlauchstück 10 fortlaufend abquetschen, um die Flüssigkeit im Schlauchabschnitt peristaltisch fortzubewegen.

## Patentansprüche

1. Drucksensor zur Ermittlung des Mediendrucks in einem Schlauchabschnitt (10) einer Infusionsleitung, mit einem Andrückorgan (11), welches den Schlauchabschnitt (10) gegen ein Widerlager (12) drückt, einem federnd gegen das Andrückorgan (11) drückenden Balken (17) und einem auf das Zurückweichen des Balkens (17) reagierenden induktiven Wegsensor (21,22,23), der ein an dem Balken (17) befestigtes Beeinflussungsteil (19) und mindestens eine ortsfeste Schwingspule (22,23) aufweist, deren Schwingungen durch die Position des Beeinflussungsteils (19) veränderbar ist,
**dadurch gekennzeichnet,**
daß der Balken (17) ein einseitig ortsfest angebrachter einarmiger Hebel ist, an dem das Andrückorgan (11) in der Nähe des ortsfesten Endes angreift, während das Beeinflussungsteil am freien Ende des Balkens befestigt ist.

2. Drucksensor nach Anspruch 1, dadurch gekennzeichnet, daß der Balken (17) eine Biegefeder ist.

3. Drucksensor nach Anspruch 1 oder 2, dadurch gekennzeichnet, daß der Wegmesser zwei Schwingspulen (22,23) aufweist, die im Bewegungsweg des Beeinflussungsteils (19) hintereinander angeordnet sind.

4. Drucksensor nach Anspruch 3, dadurch gekennzeichnet, daß in einer Auswerteeinrichtung (25,26) das Verhältnis der Frequenzen der beiden Schwingspulen (22,23) ermittelbar ist.

5. Drucksensor nach einem der Ansprüche 1 bis 4, dadurch gekennzeichnet, daß der Abstand (b) des Beeinflussungsteils (19) vom ortsfesten Ende des Balkens (17) mindestens doppelt so groß ist wie der Abstand (a) des Angriffspunktes des Andrückorgans (11) vom ortsfesten Ende.

6. Drucksensor nach einem der Ansprüche 1 bis 5, dadurch gekennzeichnet, daß die Federkraft, mit der das Andrückorgan (11) auf den Schlauchabschnitt (10) einwirkt, so groß ist, daß der Schlauchabschnitt (10) im leeren Zustand zusammengedrückt ist.

7. Drucksensor nach einem der Ansprüche 1 bis 6, dadurch gekennzeichnet, daß das Andrückorgan (11) von dem Schlauchabschnitt (10) durch eine Membran (30) getrennt ist, deren Rand in der Wand eines den Schlauchabschnitt (10) aufnehmenden Gehäuses eingespannt ist.

8. Drucksensor nach einem der Ansprüche 1 bis 7, dadurch gekennzeichnet, daß Druckmessungen in gleichmäßigen Zeitintervallen durchführbar sind, und daß nach einer vorgegebenen Anzahl von Druckmessungen ein repräsentativer Druckwert durch Mittelwertbildung der gemessenen Druckwerte errechenbar ist.

## Claims

1. A pressure sensor for determining the pressure of a medium in a hose section (10) of an infusion conduit, comprising a pressure member (11) pressing said hose section (10) against an abutment (12), a bar (17) resiliently pressing against said pressure member (11), and an inductive path sensor (21, 22, 23) responsive to the yield of the bar (17), said sensor having an influencing member (19) fixed to said bar (17) and at least one stationary oscillation coil (22, 23), the oscillation of which is variable by the position of the influencing member (19),
characterized in
that said bar (17) is a unilaterally mounted stationary one-armed lever at which the pressure member (11) engages near the stationary end, while the influencing member is mounted on the free end of the bar.

2. The pressure sensor according to claim 1, characterized in that said bar (17) is a flexible spring.

3. The pressure sensor according to claim 1 or 2, characterized in that said path sensor has two oscillation coils (22, 23) that are successively arranged in the path of the influencing member (19).

4. The pressure sensor according to claim 3, characterized in that the ratio of the frequencies of the two oscillation coils (22, 23) is determinable in an evaluating means (25, 26).

5. The pressure sensor according to one of claims 1 to 4, characterized in that the distance (b) of the influencing member (19) to the stationary end of the bar (17) is at least twice the distance (a) between the point of attack of the pressure member (11) and the stationary end.

6. The pressure sensor according to one of claims 1 to 5, characterized in that the resiliency with which the pressure member (11) acts on the hose section (10) is sufficiently large to squeeze the hose section (10) when empty.

7. The pressure sensor according to one of claims 1 to 6, characterized in that said pressure member (11) is separated from the hose section (10) by a membrane (30), the periphery of which is clamped in the wall of a housing accommodating the hose section (10).

8. The pressure sensor according to one of claims 1 to 7, characterized in that pressure measurements are performable in uniform time intervals, and that, after a predetermined number of pressure measurements, a representative pressure value is calculatable by averaging the measured pressure values.

## Revendications

1. Capteur de pression, destiné à déterminer la pression d'un milieu dans un segment (10) de tuyau
d'un conduit d'infusion, pourvu d'un organe d'appui (11) qui appuie le segment (10) de tuyau contre un contre-appui (12), d'une barre (17) s'appuyant élastiquement contre l'organe d'appui (11) et d'un capteur inductif de déplacement (21, 22, 23), réagissant à un recul de la barre (17) et comportant un élément d'influence (19) fixé sur la barre (17) et au moins une bobine mobile fixe (22, 23), dont les oscillations peuvent être modifiées par la position de l'élément d'influence (19),
**caractérisé en ce que**, la barre (17) est un levier à un bras, monté de façon fixe à l'un de ses côtés, sur lequel l'organe d'appui (11) agit au voisinage de l'extrémité fixe tandis que l'élément d'influence est fixé à l'extrémité libre de la barre.

2. Capteur de pression selon la revendication 1, caractérisé en ce que la barre (17) est un ressort de flexion.

3. Capteur de pression selon la revendication 1 ou 2, caractérisé en ce que le dispositif de mesure de déplacement comprend deux bobines d'oscillations (22, 23) qui sont disposées l'une derrière l'autre dans le trajet de déplacement de l'élément d'influence (19).

4. Capteur de pression selon la revendication 3, caractérisé en ce que le rapport des fréquences des deux bobines d'oscillations (22, 23) peut être déterminé dans un dispositif d'évaluation (25, 26).

5. Capteur de pression selon l'une des revendications 1 à 4, caractérisé en ce que la distance (b) entre l'élément d'influence (19) et l'extrémité fixe de la barre (17) est au moins double de la distance (a) entre le point d'application de l'organe d'appui (11) et l'extrémité fixe.

6. Capteur de pression selon l'une des revendications 1 à 5 caractérisé en ce que la force élastique qu'exerce l'organe d'appui (11) sur le segment (10) de tuyau est suffisante pour que le segment (10) de tuyau soit écrasé dans l'état vide.

7. Capteur de pression selon l'une des revendications 1 à 6 caractérisé en ce que l'organe d'appui (11) est séparé du segment (10) de tuyau par une membrane (30) dont le bord est tendu dans la paroi d'un boîtier recevant le segment (10) de tuyau.

8. Capteur de pression selon l'une des revendications 1 à 7, caractérisé en ce que des mesures de pression peuvent être exécutées à des intervalles de temps égaux et en ce qu'une valeur de pression représentative peut être calculée après un nombre prédéterminé de mesures de pression en calculant la moyenne des valeurs de pression mesurées.
